(19) Europäisches Patentamt
European Patent Office
Office européen des brevets

(11) EP 1 933 966 B1

# (12) FASCICULE DE BREVET EUROPEEN

(45) Date de publication et mention de la délivrance du brevet:
**30.05.2012 Bulletin 2012/22**

(21) Numéro de dépôt: **06775050.5**

(22) Date de dépôt: **28.07.2006**

(51) Int Cl.:
***B01D 15/00*** *(2006.01)* ***C01D 15/00*** *(2006.01)*
***H01M 10/26*** *(2006.01)* ***H01M 4/36*** *(2006.01)*
***H01M 4/40*** *(2006.01)* ***B01J 20/04*** *(2006.01)*
***C99Z 99/00*** *(2006.01)*

(86) Numéro de dépôt international:
**PCT/CA2006/001242**

(87) Numéro de publication internationale:
**WO 2007/025361 (08.03.2007 Gazette 2007/10)**

## (54) PROCÉDÉ DE PURIFICATION D'UN ÉLECTROLYTE CONTENANT UN SEL DE MÉTAL ALCALIN

VERFAHREN ZUR REINIGUNG EINES ELEKTROLYTES ENTHALTEND EINES ALKALIMETALLSALZES

PURIFICATION METHOD FOR AN ELECTROLYTE CONTAINING AN ALKALI METAL SALT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.08.2005 CA 2517248**

(43) Date de publication de la demande:
**25.06.2008 Bulletin 2008/26**

(73) Titulaire: **HYDRO-QUEBEC**
**Montréal**
**Québec H2Z 1A4 (CA)**

(72) Inventeurs:
- **ZAGHIB, Karim**
**Longueuil, QC J4M 2M7 (CA)**
- **JALBERT, Jocelyn**
**Repentigny QC J5Y 1V1 (CA)**
- **GUERFI, Abdelbast**
**Brossard, Québec J4X 1W2 (CA)**
- **MICHOT, Christophe**
**Montréal, Québec H2T 2Z9 (CA)**
- **GAUTHIER, Michel**
**La Prairie, Québec J5R 1E6 (CA)**
- **DONTIGNY, Martin**
**Varennes, Québec J3X 1A2 (CA)**
- **CHAREST, Patrick**
**Sainte-Julie, Québec J3E 1P2 (CA)**

(74) Mandataire: **Sueur, Yvette et al**
**Cabinet Sueur & L'Helgoualch**
**Le Centralis**
**63, avenue du Général Leclerc**
**92340 Bourg-la-Reine (FR)**

(56) Documents cités:
**EP-A1- 1 498 409** **CA-A1- 2 424 361**
**JP-A- 59 009 874** **JP-A- 59 046 764**
**US-A- 5 849 429** **US-B1- 6 573 002**

- **DATABASE WPI Week 200325 Thomson Scientific, London, GB; AN 2003-251504 XP002598275 & JP 2002 343454 A (TDK CORP) 29 novembre 2002 (2002-11-29)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 933 966 B1

## Description

### DOMAINE GÉNÉRAL DE L'INVENTION

La présente invention est relative à un procédé permettant la purification d'un électrolyte ionique contenant au moins un sel de métal alcalin. La purification est réalisée par mise en contact de l'électrolyte ionique avec au moins un sel de calcium.

Les électrolytes ioniques ainsi purifiées sont notamment de type liquide, polymère gel, sel fondu ou de type mélange d'au moins deux de ces derniers.

Le procédé de l'invention permet plus particulièrement de réaliser une forte déshydratation des électrolytes traités.

L'invention s'applique notamment à la préparation de solutions électrolytiques de type mélange et purifiées. Ces solutions contiennent au minimum un sel d'un élément de métal alcalin, tel un sel de lithium, dissous dans au moins un solvant de type carbonate tel que le carbonate d'éthylène (EC) ou le carbonate de propylène (PC).

Le procédé de l'invention est également utilisable pour la purification de sels de lithium impurs.

Le procédé de l'invention permet ainsi notamment d'obtenir des solutions électrolytiques de type conductrice ionique et qui présentent une faible teneur résiduelle en eau qui peut être inférieure à 150 ppm d'eau.

Le procédé permet également notamment d'obtenir des sels de lithium purifiés avec moins de 100 ppm, ceux dont la teneur en $H_2O$ est inférieure ou égale à 20 ppm sont nouveaux et font partie de la présente invention.

Les électrolytes purifiés obtenus par les procédés de l'invention, notamment les solutions anhydres ainsi obtenues avec une teneur en eau inférieure ou égale à 20 ppm par litre d'électrolyte solution, sont nouvelles du fait de leurs caractéristiques intrinsèques originales et font également partie de l'invention.

De même, les générateurs électrochimiques de l'invention qui incorporent un électrolyte purifié de l'invention et/ou un sel de lithium purifié de l'invention, présentent notamment une stabilité au stockage exceptionnelle, ils sont nouveaux et constituent également un objet de l'invention.

### ÉTAT DE LA TECHNIQUE

Les solutions électrolytiques de type ionique sont traditionnellement préparées par mélange de quantités déterminées d'un sel, par exemple d'un sel de métal alcalin, de solvants et éventuellement d'un polymère lorsque l'on recherche une consistance de type gel, utile notamment dans la préparation de piles de type Li-ion ou Li-métal, pour obtenir une forte densité d'énergie.

Dans le domaine des batteries lithium-ion, les électrolytes de type $LiPF_6$+EC-DEC sont utilisés dans les batteries commerciales. Le vieillissement des électrolytes en fonction du temps génère de l'eau. Le stockage des électrolytes, à long terme, contamine ces dernières par la formation d'eau. Lorsque la quantité d'eau dans l'électrolyte dépasse 50 ppm, les performances de la batterie sont détériorées, ainsi la durée de vie est réduite et le phénomène indésirable d'autodécharge est augmenté.

Lors de la préparation de l'électrolyte, la teneur en eau est très critique, car la présence d'eau dans l'électrolyte est également à l'origine de la formation notamment :

- de dérivés fluorés, tel HF, acide agressif qui attaque toutes les parties de la batterie;
- d'hydroxydes du sel de métal alcalin, formés *in situ*, en présence du sel de métal alcalin et qui augmente inutilement la résistance des batteries; et
- de réactions ioniques parasites.

De plus, l'eau réduit l'électrolyte et elle est à l'origine de la formation d'un film de passivation sur les électrodes, cette réaction s'accompagne de la formation de gaz et rend la batterie non sécuritaire.

La teneur en eau dans les électrolytes de type ionique, au moment de leur préparation, est habituellement comprise entre 500 et 1000 ppm.

La présence, dans un système électrochimique, d'un électrolyte comportant plus de 100 ppm en poids d'eau diminue son intérêt commercial, en le rendant non sécuritaire et en générant une perte de rendement au niveau des électrodes.

Parmi les techniques utilisées à ce jour pour limiter les teneurs en eau de solutions ionique on mentionne:

- l'utilisation de composants à faible teneur en eau et la préparation en milieu anhydre; et
- la déshydratation par passage sur tamis moléculaire.

Ces procédés sont complexes à mettre en oeuvre et coûteux, notamment du fait que plusieurs passages sur

tamis moléculaires sont nécessaires et la régénération des tamis doit être réalisée après un nombre limité d'utilisation des tamis.

De plus, les teneurs en eau résiduelle, présentes dans de tels électrolytes, sont encore élevées et les autres impuretés sont encore présentes.

La complexité et le caractère dispendieux des procédés connus pour la purification des électrolytes est rappelé dans Handbook of Battery Materials, de J. O. Besenhard, Wiley-VCH, année 1999, page 464.

La purification de solutions électrolytiques à base de sels de lithium est d'autant plus complexe que de tels sels s'obtiennent habituellement accompagnés d'impuretés.

Par ailleurs, les solutions électrolytiques ont une tendance marquée à s'hydrater aussi bien au stockage qu'en utilisation. Ce qui résulte en une perte sensible d'efficacité des systèmes électrochimiques dans lesquels ces solutions sont présentes. Une perte d'efficacité au stockage est constatée au bout de quelques mois et une perte d'efficacité en fonctionnement au bout de quelques cycles dans les régions humides, notamment dans les régions tropicales.

Ces pertes d'efficacité obligent à retourner les électrolytes en usine pour y être à nouveau déshydratées, selon les mêmes procédés coûteux, ou à incorporer les électrolytes dans des systèmes électrochimiques de faible valeur commerciale.

La déshydratation de solutions neutres, telles des huiles, par introduction d'un carbure du calcium ($CaC_2$) est décrite dans le brevet CA-A-2207730 d'Hydro-Québec. Ce document ne contient cependant aucune mention du fait que le $CaC_2$ pourrait être utilisé pour purifier des solutions de type ionique.

Il existait donc un besoin pour un nouveau procédé de purification de solutions --électrochimiques ioniques, procédé dépourvu des inconvénients des procédés décrits dans l'art antérieur et permettant non seulement une déshydratation partielle mais aussi une purification poussée de l'électrolyte.

Ce procédé doit, en outre, pouvoir être mise en oeuvre aussi bien à l'usine de préparation des solutions électrolytiques que sur les lieux d'entreposage par de simples opérateurs, être peu dispendieux et nécessiter un minimum d'appareillage.

## DESCRIPTION DE L'INVENTION

Dans le cadre de l'invention, on entend par électrolytique toute solution utilisable comme électrolyte. Il s'agit notamment des solutions définies en page 2 de l'ouvrage Electrochemistry Method, de Allen J.Bard et Larry R. Faulkner, édition 1980 de John Wiley & Sons.

La notion d'électrolyte est associée à celle de générateur électrochimique dans les lesquels un système à deux phases électrolytes1/électrolyte2 ou électrolyte/électrode est à l'origine d'un déplacement de charges.

Dans ce document de référence, un électrolyte est défini essentiellement comme une première phase au travers de laquelle une charge est générée par le déplacement d'ions.

Les électrolytes peuvent être des solutions liquides ou des sels fondus, ou ils peuvent être des solides conducteurs ioniques, tels que de la β-alumine de sodium qui présente des ions sodium mobiles.

La seconde phase à la surface peut être un autre électrolyte, ou peut être une électrode, qui est une phase au travers de laquelle une charge est réalisée par un mouvement électronique.

Les solutions électrolytiques purifiables par mise en oeuvre de la méthode de l'invention contiennent préférentiellement :

- entre 0,1 et 2 Molaire d'au moins un sel de métal alcalin qui est de préférence choisi dans le groupe constitué par KTFSI, $NABF_4$, les sels de lithium et les mélanges d'au moins deux de ces sels;
  - un solvant du sel de métal alcalin et qui contribue à la conductivité ionique de la solution;
  - jusqu'à 6000 ppm, de préférence entre 50 et 5000 ppm d'impuretés dont de préférence au moins 700 à 2000 ppm d'eau, les autres impuretés étant choisies de préférence dans le groupe constitué par du HF, Na et K; et
  - de préférence dans le cas d'électrolytes de type polymère gel, jusqu'à 30 % en poids d'un polymère ou d'un mélange de polymères assurant la formation d'une matrice ou de plusieurs matrices gel au sein de l'électrolyte liquide.

Le procédé objet de l'invention est caractérisé par le fait qu'il comporte au moins une étape de mise en contact des particules de carbure de calcium avec l'électrolyte liquide à purifier.

Dans le cas où l'électrolytique contient un polymère, susceptible de donner une matrice gel par réticulation, la réticulation du polymère est préférentiellement complétée en présence d'un agent de réticulation et/ou en présence d'une source UV, et après finalisation du traitement de purification selon l'invention.

Dans le cadre de la présente invention, on réfère pour la définition des sels fondus, dans leur généralité, à l'ouvrage Molten Salt Techniques - Volume 1 by D. G. Lovering et R. J. Gale, 1942, Éditeur Plenum Press New York C

1983-1984, plus particulièrement en pages 2 à 5.

G. Morant et J. Hladik dans Électrochimie des sels fondus Tome I - propriétés de transport Editions : Paris Masson 1969 précise, dans le chapitre propriété des solvants, que sur la base de la structure du liquide les sels fondus peuvent être divisés en deux groupes. Le premier groupe est constitué par les composés comme les halogénures alcalins qui sont liés principalement par des forces ioniques et le second groupe comprend des composés comportant essentiellement des liaisons covalentes.

Les sels fondus sont des solvants particuliers, considérés comme des solvants ionisés, dans lesquels il est possible de dissoudre aisément des composés inorganiques et de travailler à des températures élevées. Il s'agit souvent de sels ioniques tels que LiCl-KCl, NaCl-KCl et $LiNO_3$-$KNO_3$. Cette définition est extraite de session 2003, épreuve spécifique - filière PC - Institut National Polytechnique de Toulouse.

Dans le cadre de la présente invention, on entend par sels fondus les sels qui sont à l'état liquide à une température comprise entre -30 et 350°C, de préférence entre -20 et 60°C. En effet, à des températures supérieures à 350°C, les polymères présents dans les mélanges de l'invention risqueraient d'être carbonisés.

Plus particulièrement encore, les sels fondus d'intérêt dans le cadre de la présente invention sont ceux constitués d'au moins deux sels choisis dans le groupe constitué par les sels d'imidazolium, d'imidinium, de pyridinium, d'ammonium, de pyrolium, de sulfonium, de phosphonium, ainsi que par les mélanges d'au moins deux de ces derniers.

A titre d'exemples préférentiels, on cite les sels hydrophobiques solubles décrits dans US-A-5683832 (Bonhote et al.) et ceux décrits dans le document Room temperature molten salts as lithium battery électrolyte de M. Armand et alias, publié dans Electrochimica Acta 49 (2004) pages 4583-4588, ainsi que les mélanges d'au moins deux de ces derniers.

Ces sels fondus sont présents dans les mélanges ternaires polymère-sels fondus-solvant (PSS) de l'invention. Ces mélanges ainsi que les mélanges quaternaires correspondants obtenus par ajout d'un sel de conduction ionique, sont sous forme homogène et liquide à température ambiante.

Le polymère ou le mélange de polymères, présent dans le mélange ternaire ou quaternaire, est choisi dans la famille des polymères de type polyéther à 3 branches (de préférence ceux décrits dans le brevet d'Hydro-Québec US-A-6280882), à 4 branches (de préférence ceux décrits dans la demande de brevet internationale d'Hydro-Québec publiée sous le no WO 03/063287), des polymères vinyliques de type EG (de préférence ceux décrits dans la demande de brevet de DKS EP-A-1249461) et des mélanges d'au moins deux de ces derniers polymères. Les polymères de ces familles préférentielles sont par ailleurs avantageusement choisis parmi les polymères qui sont réticulables par ultraviolet, infrarouge, traitement thermique et/ou faisceau d'électrons (EBeam). Ces polymères sont choisis de préférence transparents.

**Polymères à 3 banches :** Comme illustré dans le document Relationship between Structural Factor of Gel Electrolyte and Characteristics of Electrolyte and Lithium-ion Polymer Battery Performances, par Hiroe Nakagawa et alias, The 44th Symposium in Japan, Nov 4-6, 2003, abstract 3D26, des polymères à trois branches ont la forme d'un peigne à 3 branches. Les 3 branches sensiblement parallèles de ces polymères sont fixées de préférence au centre et aux deux extrémités d'un squelette de petite taille, comportant de préférence 3 atomes, de préférence 2 atomes de carbone, dans la chaîne.

Dans le cas d'une chaîne à 3 atomes de carbones, chacun de ces atomes est relié à une branche.

Parmi ces polymères à 3 branches, et dans le cadre de la présente invention, on préfère ceux qui présentent un poids moléculaire moyen (MW) variant de 1000 à 1000000, plus préférentiellement encore ceux dont le poids moléculaire moyen varie de 5000 à 100000.

**Polymères à quatre branches :** la demande de brevet internationale d'Hydro-Québec WO 03/063287 décrit une famille de polymères à quatre branches considérée préférentielle pour l'invention.

De tels polymères ont la forme d'un peigne à 4 branches. Les 4 branches sensiblement parallèles de ces polymères sont fixées respectivement entre les deux extrémités (de préférence fixées sur la chaîne de façon symétrique) et aux deux extrémités d'une chaîne de petite taille constitué de préférence d'une chaîne comportant 4 atomes qui sont de préférence 4 atomes de carbone.

Dans le cas d'une chaîne à 4 atomes de carbones, chaque atome est relié à une branche.

De tels polymères possèdent de préférence des terminaisons hybrides, plus préférentiellement encore des terminaisons hybrides acrylates (de préférence méthacrylate) et alkoxy (de préférence alkoxy avec de 1 à 8 atomes de carbone, plus préférentiellement encore méthoxy ou éthoxy), ou encore vinyl; une branche au moins dudit polymère à quatre branches (et de préférence au moins deux branches) étant susceptible de donner lieu à une réticulation.

De préférence, le polymère à quatre branches est un de ceux définis dans les colonnes 1 et 2 du brevet américain US-A-6190804 (Ishiko et al.).

Un tel polymère est préférentiellement un polymère en étoile de type polyéther qui possède au moins quatre branches ayant des terminaisons contenant les fonctions suivantes : acrylate ou méthacrylate et alkoxy, allyloxy et/ou vinyloxy, dont au moins une, et de préférence dont au moins deux de ces fonctions sont actives pour permettre une réticulation.

D'autres familles de polyéthers dont la masse moléculaire est supérieure ou égale à 30000 sont avantageusement utilisées dans le cadre de la présente invention.

Selon un autre mode préférentiel de réalisation de la présente invention, le polymère à 4 branches est un polymère tétrafonctionnel de préférence à haut point moléculaire répondant à la formule (I) :

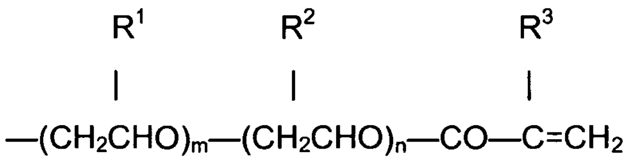

(I)

dans laquelle $R^1$et $R^2$ représentent chacun un atome d'hydrogène ou un alkyle inférieur (de préférence de 1 à 7 atomes de carbones); $R^3$ représente un atome d'hydrogène ou un groupe méthyle ; m et n représentent chacun un entier supérieur ou égal à 0 ; dans chaque chaîne à haut point moléculaire, m+n > 35 ; et chacun des groupes $R^1$, $R^2$, $R^3$ et chacun des paramètres m et n peuvent être identiques ou différents dans les 4 chaînes à haut point moléculaire.

Parmi ces polymères à quatre branches, ceux qui possèdent un poids moléculaire moyen compris entre 1000 et 1000000, plus préférentiellement encore ceux qui ont un poids moléculaire moyen variant de 5000 à 100000 sont particulièrement intéressants.

Selon un autre mode préférentiel, on retient les polyéthers de type étoile d'au moins quatre branches avec une terminaison hybride (acrylate ou méthacrylate et alkoxy, allyloxy, vinyloxy).

Également, les polymères vinyliques de type EG et plus particulièrement ceux décrits dans la demande de brevet de DKS EP-A-1249461 sont d'un intérêt particulier comme matériau de protection. Particulièrement avantageux parmi ces polymères sont ceux dont le poids moléculaire moyen varie de 600 à 2500.

Des polymères de cette famille peuvent avantageusement être obtenus en faisant réagir l'oxyde d'éthylène et le propanol-1-époxy-2,3 avec le matériau de départ, ou en faisant réagir le propanol-1-époxy-2,3 avec l'éthylène glycol comme matériau de départ pour produire un composé polymère. Cette étape est suivie par l'introduction de groupes fonctionnels polymérisables et/ou non-polymérisables à chaque extrémité d'un squelette et des chaînes latérales dans le composé polymère résultant.

Les composés ayant un ou plusieurs résidus hydrogènes actifs et alkoxyde peuvent aussi être utilisés comme matériaux de départ.

Des exemples de résidus hydrogènes actifs pour le composé ayant un ou plusieurs résidus hydrogènes actifs incluent le groupe des hydroxyles, ayant de préférence de 1 à 5 résidus hydrogènes actifs. Des exemples spécifiques des composés ayant un ou plusieurs résidus hydrogènes actifs incluent le monométhyléther de triéthylèneglycol, l'éthylèneglycol, la glycérine, la diglycérine, le pentaérythritol et leurs dérivés.

Des exemples spécifiques d'alkoxyde incluent aussi $CH_3ONa$, t-BuOK et leurs dérivés.

Les composés polymères polyéther de l'invention ont l'unité de structure représentée par la formule (1) ainsi que l'unité de structure représentée par la formule (2) et/ou l'unité de structure représentée par la formule (3). Le nombre d'unités de structure représentée par la formule (1) dans une molécule est de 1 à 22800, plus avantageusement de 5 à 11400, et plus avantageusement encore de 10 à 5700. Le nombre d'unités de structure de la formule (2) ou (3) (mais quand les deux sont incluses, c'est le nombre total) est de 1 à 13600, plus avantageusement de 5 à 6800, et plus avantageusement encore de 10 à 3400. Les formules (1), (2) et (3) sont :

$$-CH_2CH_2O- \qquad (1)$$

(2)

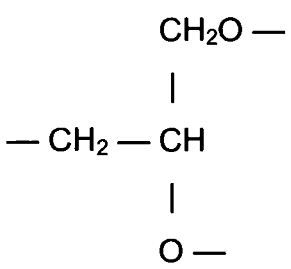

(3)

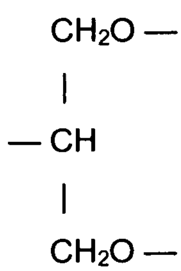

Des exemples de groupes fonctionnels polymérisables introduits à chaque extrémité moléculaire incluent les résidus (méth)acrylates, les groupes allyle et les groupes vinyle, et des exemples de groupes fonctionnels non-polymérisables incluent les groupes alkyle ou les groupes fonctionnels comprenant des atomes de bore.

Comme les groupes alkyle ci-dessus, les groupes alkyle ayant de 1 à 6 atomes de carbone sont avantageux, ceux ayant de 1 à 4 atomes de carbone sont plus avantageux, et les groupes méthyle sont d'un intérêt particulier.

Des exemples de groupes fonctionnels comprenant des atomes de bore incluent ceux représentés par les formules suivantes (4) ou (5).

(4)

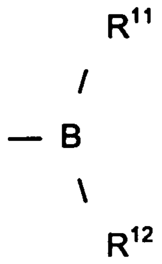

(5)

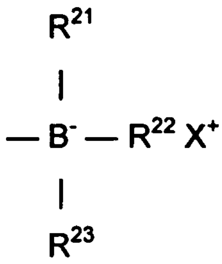

$R^{11}$, et $R^{12}$ dans la formule (4) et $R^{21}$, $R^{22}$, $R^{23}$ dans la formule (5) peuvent être identiques ou différents, et chacun représente un hydrogène, halogène, alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique, -B($R^a$) ($R^b$), -OB($R^a$) ($R^b$) ou OSi($R^a$)($R^b$)($R^c$). ($R^a$), ($R^b$) et ($R^c$) représentent chacun un hydrogène, halogène, alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique ou dérivés de ceux-ci. $R^{11}$, et $R^{12}$ dans la formule (4) et $R^{21}$, $R^{22}$, $R^{23}$ dans la formule (5) peuvent être liés ensemble pour former un anneau, et l'anneau peut avoir des substituants. Chaque groupe peut aussi être substitué par des groupes substituables. De plus, $X^+$ dans la formule (5) représente un ion métallique alcalin, et est avantageusement un ion lithium.

Les extrémités des chaînes moléculaires dans le polymère polyéther peuvent toutes être des groupes fonctionnels polymérisables, des groupes fonctionnels non-polymérisables, ou peuvent inclure les deux.

Le poids moléculaire moyen (Mw) de ce type de composé polymère polyéther n'est pas spécialement limité, mais il est habituellement d'environ 500 à 2 millions, et avantageusement d'environ 1000 à 1,5 millions.

Les polymères de ces familles préférentielles sont par ailleurs avantageusement choisis parmi les polymères qui sont réticulables par ultraviolet, infrarouge, traitement thermique et/ou faisceau d'électrons (EBeam).

La formation de la matrice polymère est réalisée de préférence dans le système électrochimique dans lequel le précurseur d'électrolyte est placé, et de préférence en utilisant une des méthodes décrite dans la demande de brevet internationale publiée sous le no WO 2004/088610 ou la demande US d'Hydro-Québec publiée sous le no 2005/0234177 A1.

L'introduction de $CaC_2$ dans la solution électrolytique permet de réduire l'eau résiduelle présente après la déshydratation et s'accompagne de la formation du gaz acétylène, suivant la réaction :

$$CaC_2\text{(solide)} + 2H_2O\text{(électrolyte)} \rightarrow Ca(OH)_2\text{(solide)} + C_2H_2 \text{ (gaz)}$$

L'élimination de l'eau est réalisée par la formation d'hydroxyde de calcium et par dégazage de l'acétylène.

L'acétylène est éliminé par évaporation, par dégazage ou par purge à l'aide de gaz inertes tels que l'azote ou l'hélium, ce qui permet d'éliminer complètement l'acétylène formé dans la solution électrolytique.

Il a été constaté de façon inattendue que la taille des particules de $CaC_2$ influence la quantité d'eau résiduelle. Il a en effet été mis en évidence que, par l'utilisation des particules de taille micrométrique et de préférence de taille nanométrique, la surface de contact entre les molécules d'eau est celle développée par les particules de $CaC_2$ est augmentée, et ainsi la quantité d'eau résiduelle éliminée est à son maximum.

Afin d'assurer un contact efficace entre l'électrolyte ($H_2O$) et les particules de sels de calcium tel $CaC_2$, le mélange est avantageusement placé dans un mélangeur en fonctionnement pour une durée qui est avantageusement d'une heure.

Une centrifugeuse, de préférence de type ultra-centrifugeuse, est utilisée afin de séparer la phase liquide, constituée de l'électrolyte purifié, de la phase solide constituée de l'hydroxyde de calcium et d'un faible pourcentage de carbure de calcium n'ayant pas réagi.

Une séparation des phases liquide et solide peut également être réalisée par décantation de la phase solide.

Le procédé de l'invention peut être réalisé de façon continue, discontinue ou semi-continue.

Le carbure de calcium récupéré par calcination de l'hydroxyde de calcium formé au cours de la purification peut être avantageusement recyclé.

La purification est réalisée de préférence sous atmosphère inerte, plus préférentiellement encore sous argon et/ou sous azote.

Dans le cas d'une réalisation semi-continue du procédé de l'invention, la purification est avantageusement réalisée par percolation de l'électrolyte liquide sur un lit de carbure de calcium de façon continue jusqu'à épuisement du lit de carbure de calcium.

**Un premier objet** de la présente invention est constitué par un procédé de purification d'un électrolyte ionique contenant au moins un sel de métal alcalin. Ce procédé comporte au moins une étape de mise en contact de particules de $CaC_2$ avec l'électrolyte.

Selon une première variante, le procédé de l'invention est appliqué à la purification d'un électrolyte ionique liquide, de préférence liquide à température ambiante, et qui contient au moins un solvant qui assure la conductivité ionique et qui dissout le sel de métal alcalin, ce solvant étant de type ionique.

Selon une deuxième variante, l'électrolyte est de type polymère gel, ou de type mélange d'au mois deux polymères gel, et la purification est réalisée avant la formation d'une matrice polymère.

Selon une troisième variante, l'électrolyte ionique est de type sel fondu (liquide ionique) avec ou sans sel de métal alcalin, de préférence avec ou sans sel de lithium. Plus préférentiellement encore, l'électrolyte comprend un sel fondu ou un mélange d'au moins deux sels fondus.

Selon une quatrième variante, l'électrolyte ionique est un mélange d'au moins deux électrolytes choisis dans le groupe constitué par les électrolytes de type liquide, gel et sels fondus.

Selon un mode de réalisation avantageux du procédé de l'invention, la purification est appliquée à un électrolyte liquide qui contient:

- entre 0,1 et 2 Molaire d'au moins un sel de métal alcalin;
- un solvant du sel de métal alcalin et qui contribue à la conductivité ionique de la solution; et
- jusqu'à 6000 ppm d'impuretés.

Selon un autre mode de réalisation avantageux du procédé, ce dernier est appliqué à la purification d'un électrolyte gel qui contient:

- entre 0,1 et 2 Molaire d'au moins un sel de métal alcalin;
- un solvant du sel de métal alcalin et qui contribue à la conductivité ionique de la solution;
- jusqu'à 6000 ppm d'impuretés; et
- un polymère ou un mélange de polymères, de préférence jusqu'à 30 % en poids d'un polymère assurant la formation d'une matrice gel au sein de l'électrolyte liquide ou de préférence jusqu'à 30 % en poids d'un mélange de polymère assurant la formation d'une ou de plusieurs matrices gel au sein de l'électrolyte liquide.

Selon un autre mode de réalisation avantageux du procédé, ce dernier est appliqué à la purification d'un électrolyte de type sel fondu qui contient:

- entre 0 et 2 Molaire d'au moins un sel de métal alcalin;
- optionnellement un solvant du sel de métal alcalin et qui contribue à la conductivité ionique de la solution; et
- jusqu'à 6000 ppm d'impuretés.

De préférence, l'anion du sel fondu est du bis-fluorosulfonyl imide ($FSI^-$) et/ou du bis-trifluorosulfonyl imide ($TFSI^-$).

Avantageusement encore, le cation du sel fondu est de l'éthyl-3-méthylimidazolium (EMI) et/ou du n-méthyl-n-propylpyrolidium et/ou du n-methyl-nbutylpyrrolidium($PY14^+$) et/ou du n-propyl-piperidinium ($PPT3^+$).

Selon un autre mode avantageux de réalisation du procédé de l'invention, ce dernier est appliqué à la purification d'un mélange d'électrolyte choisi dans le groupe des (liquides ioniques plus polymère), (liquide ionique plus solvant), et (liquide ionique plus solvant plus polymère).

Le procédé de purification de l'invention est applicable à la purification des électrolytes comportant tout type de sel de métal alcalin, mais il présente un intérêt particulier lorsqu'il est appliqué à la purification des électrolytes

comportant tout type d'un sel de métal alcalin choisi dans le groupe constitué par KTFSI, $NaBF_4$, les sels de lithium et les mélanges d'au moins deux de ces sels.

Les électrolytes qui sont purifiés avec succès par le procédé de l'invention contiennent de préférence entre 50 et 5000 ppm d'impuretés (bornes comprises), et plus préférentiellement encore entre 700 à 2000 ppm d'eau (bornes comprises), les autres impuretés étant de préférence choisies dans le groupe constitué par du HF, Na, K et les mélanges d'au moins deux de ces derniers.

Selon un autre mode préférentiel de réalisation du procédé de l'invention, ce dernier est mis en oeuvre à l'aide de particules de carbure de calcium, utilisées pour réaliser la purification, et qui présentent une $d_{50}$ comprise entre 1 et 100 micromètres, bornes comprises, et plus préférentiellement encore une $d_{50}$ comprise entre 10 et 50 micromètres, bornes comprises.

De préférence, les particules de carbure de calcium ont une surface spécifique, mesurée selon la méthode BET, qui est comprise entre 5 et 200 $m^2$/gramme, bornes comprises, plus préférentiellement encore une surface spécifique comprise entre 30 et 100 $m^2$/grammes, bornes comprises.

Des résultats particulièrement intéressants sont obtenus lorsque la quantité de carbure de calcium utilisée est en excès par rapport à la quantité d'eau à éliminer, cette quantité représentant de préférence au moins 5 grammes pour 20 ml d'électrolyte à purifier, plus préférentiellement encore de 10 à 15 grammes pour 20 ml d'électrolyte à purifier.

Selon une autre variante avantageuse, le procédé de purification de l'électrolyte de l'invention est mis en oeuvre avec l'ajout des particules de carbure de calcium dans l'électrolyte à purifier et par homogénéisation du mélange ainsi obtenu, de préférence par agitation mécanique et/ou par ultrasons, de préférence pour une durée comprise entre 5 minutes et 3 heures, de préférence également, sous atmosphère inerte, qui est de préférence constituée d'argon, d'azote ou d'hélium ou d'un mélange de ces gaz, et avantageusement aussi à une température comprise entre 10 et 80°C, plus préférentiellement encore à une température comprise entre 25 et 60°C, plus avantageusement encore à une température voisine de 40°C.

D'excellents résultats sont obtenus pour le procédé de purification, en utilisant des particules de carbure de calcium qui ont une taille comprise entre 100 micromètres et 1 nanomètre, de préférence une taille comprise entre 50 micromètres et 5 nanomètres.

De préférence, la purification de l'électrolyte se fait par mise en contact de particules de $CaC_2$, avec l'électrolyte à purifier.

Avantageusement, le sel de métal alcalin est un sel de lithium choisi de préférence dans le groupe constitué par LiFSI, LiTFSI, LiBETI, $LiPF_6$, $LiClO_4$, $LiBF_4$, $LiCF_3SO_3$, LiBOB, LiDCTA, et les mélanges d'au moins deux de ces derniers, et le sel de lithium est présent dans l'électrolyte à une concentration comprise de préférence entre 0,1 et 2 Molaire et plus préférentiellement entre 0,2 et 1 Molaire exprimé par rapport à la quantité d'électrolyte. Le sel de lithium peut également être présent dans l'électrolyte à une concentration comprise entre 0,5 et 1,5 Molaire exprimé par rapport à la quantité d'électrolyte.

Lorsqu'un solvant qui dissout le sel de métal alcalin est utilisé, il est de préférence un carbonate choisi dans le groupe constitué par: EC (carbure d'éthylène), PC (carbonate de propylène), DME(diméthyléthylene), DMC (diméthylcarbonate), DEC(diethylcarbonate), EMC(éthylmethylcarbonate), GBL (gamabutyrolactone) et les mélanges d'au moins deux de ces derniers, le solvant étant la référence molaire par rapport à laquelle la quantité de sel de métal alcalin à ajouter est calculée.

Lors de la mise en oeuvre du procédé de l'invention pour la purification d'un électrolyte de type polymère gel, le polymère est de type polyéthers, siloxane, PVDF(polyvinyldifluoro), Polyacrylonitrile, EPDM(éthylène propylènediéthylmonomère), PMMA(polymethylmétacrylate) ou de type mélange d'au moins deux de ces polymères; la teneur en polymère dans l'électrolyte est préférentiellement comprise entre 1 et 30 %, plus préférentiellement encore comprise entre 5 et 15 % du poids total de l'électrolyte.

Comme mode préférentiel de mise en oeuvre de l'invention, on peut citer l'application à la purification d'un électrolyte liquide contenant :

- entre 0,1 et 2 Molaire d'un sel de métal alcalin;
- un solvant;
- entre 50 et 5000 ppm d'impuretés dont de préférence 700 à 2000 ppm d'eau,

ledit procédé comprenant les étapes suivantes :

- a) de mélange de l'électrolyte avec une quantité de carbure de calcium qui correspond à un excès de la quantité d'eau à éliminer, de préférence de mélange mécanique réalisé dans un mélangeur et pour une durée comprise entre 5 minutes et 3 heures, plus préférentiellement pour une durée d'environ 1 heure, et de préférence avec élimination des gaz formés;
- b) de séparation par décantation, centrifugation, ou par ultracentrifugation ou par une combinaison d'au moins deux

de ces techniques, de la phase solide, constituée notamment de l'hydroxyde de calcium formé dans l'étape a) et de l'excès de carbure de calcium, de la phase liquide constituée de l'électrolyte purifiée; et
- c) éventuellement transformation de l'hydroxyde de calcium en carbure de calcium, de préférence par calcination, et recyclage du carbure de calcium ainsi obtenu dans l'étape a),

l'élimination de la phase solide du mélange obtenu à la fin de l'étape a) devant être finalisée rapidement, de préférence en moins de 10 minutes et plus préférentiellement encore en moins de 5 minutes après la fin de l'étape a), et les étapes a) et b) pouvant être réalisées aussi souvent que nécessaire pour atteindre le degré de purification désiré.

Comme mode préférentiel de mise en ouvre de l'invention, on peut citer l'application à la purification d'un électrolyte de type sel fondu contenant :

- au moins un sel fondu;
- entre 0,1 et 2 Molaire d'un sel de métal alcalin, la quantité de sel de métal alcalin étant exprimée par rapport à la quantité de sel fondu; et
- avec ou sans solvant;
- entre 50 et 5000 ppm d'impuretés dont de préférence 700 à 2000 ppm d'eau;

ledit procédé comprenant les étapes suivantes :

- a) de mélange de l'électrolyte avec une quantité de carbure de calcium qui correspond à un excès de la quantité d'eau à éliminer, de préférence de mélange mécanique réalisé dans un mélangeur et pour une durée comprise entre 5 minutes et 3 heures, plus préférentiellement pour une durée d'environ 1 heure, et de préférence avec élimination du mélange des gaz formés;
- b) de séparation par décantation, centrifugation, ou par ultracentrifugation ou par un mélange d'au moins deux de ces techniques, de la phase solide, constituée notamment de l'hydroxyde de calcium formé dans l'étape a) et de l'excès de carbure de calcium, de la phase liquide constituée de l'électrolyte purifiée; et
- c) éventuellement transformation de l'hydroxyde de calcium en carbure de calcium, de préférence par calcination, et recyclage du carbure de calcium ainsi obtenu dans l'étape a),

l'étape d'élimination de la phase solide du mélange obtenu à la fin de l'étape a) devant être finalisée rapidement, de préférence en moins de 10 minutes et plus préférentiellement encore en moins de 5 minutes après la fin de l'étape a), et les étapes a) et b) pouvant être réalisées aussi souvent que nécessaire pour atteindre le degré de purification désiré.

Comme autre mode préférentiel de mise en oeuvre de l'invention, on peut citer l'application à la purification d'un électrolyte de type gel. Pour ce type d'électrolyte, la purification est réalisée à partir d'un précurseur d'électrolyte contenant :

- entre 0,1 et 2 Molaire d'un sel de métal alcalin;
- un solvant;
- entre 50 et 5000 ppm d'impuretés dont de préférence 700 à 2000 ppm d'eau; et
- un polymère présent dans l'électrolyte liquide jusqu'à 30 % en poids,

ledit procédé comprenant les étapes suivantes :

- a) de mélange du précurseur d'électrolyte avec une quantité de carbure de calcium qui correspond à un excès de la quantité d'eau à éliminer, de préférence de mélange mécanique réalisé dans un mélangeur et pour une durée comprise entre 5 minutes et 3 heures, plus préférentiellement pour une durée d'environ 1 heure, et de préférence avec élimination du mélange des gaz formés;
- b) de séparation par décantation, centrifugation, ou par ultracentrifugation ou par un mélange d'au moins deux de ces techniques, de la phase solide, constituée notamment de l'hydroxyde de calcium formé dans l'étape a) et de l'excès de carbure de calcium, de la phase liquide constituée du précurseur d'électrolyte purifiée;
- c) de transformation du précurseur d'électrolyte en électrolyte gel polymère par transformation du polymère en matrice polymère, la transformation étant réalisée de préférence à une température comprise entre 60 et 80°C, bornes comprises, pour une durée qui est de préférence comprise entre 15 minutes et 120 minutes, de préférence comprise entre 45 et 60 minutes, et en présence d'un précurseur de la matrice qui est de préférence choisi parmi ceux décrits dans le brevet 4 branches WO 03/063287 et qui est à une teneur comprise entre 500 et 2000 ppm, de préférence d'environ 1000 ppm, plus avantageusement encore le précurseur est de type Percadox (marque de commerce), sel de la compagnie Akzo-Nobel, et la transformation du polymère en matrice polymérique est réalisée de façon préférentielle dans le système électrochimique dans lequel le précurseur d'électrolyte purifié est placé; et

- d) éventuellement de transformation de l'hydroxyde de calcium en carbure de calcium, de préférence par calcination, et recyclage du carbure de calcium ainsi obtenu dans l'étape a),

l'élimination de la phase solide du mélange obtenu à la fin de l'étape a) devant être finalisée rapidement, de préférence en moins de 10 minutes et plus préférentiellement encore en moins de 5 minutes après la fin de l'étape a), et les étapes a) et b) pouvant être réalisées aussi souvent que nécessaire pour atteindre le degré de purification désiré.

Le procédé de purification de l'invention, indépendamment de l'électrolyte à purifier, peut être réalisé de façon continue, et dans ce cas, de préférence,

- le carbure de calcium récupéré dans l'étape c) est recyclé dans l'étape a); et
- la purification est réalisée de préférence sous atmosphère inerte, plus préférentiellement encore sous argon et/ou sous azote.

Le procédé de purification de l'invention, indépendamment de l'électrolyte à purifier, peut être réalisé de façon semi-continue, et dans ce cas, de préférence, par percolation de l'électrolyte liquide sur un lit de carbure de calcium de façon continue jusqu'à épuisement du lit de carbure de calcium.

**Un second objet** de la présente invention est constitué par un électrolyte liquide purifié obtenu par mise en oeuvre de l'un des procédés selon le premier objet de la présente invention.

De préférence cet électrolyte contient moins de 20 ppm d'une ou de plusieurs impuretés. Plus avantageusement encore, l'électrolyte contient moins de 1 ppm d'une ou de plusieurs impuretés. Cette impureté est avantageusement de l'eau.

Avantageusement, l'électrolyte liquide comprend :

- au moins un sel de métal alcalin ;
- un solvant;
- des impuretés; et
- optionnellement un polymère,

ledit électrolyte satisfaisant au moins une des conditions suivantes :

- moins de 10 ppm en eau, mesuré selon la méthode de Karl Fischer;
- moins de 10 ppm en HF, mesuré par filtration;
- moins de 10 ppm en potassium, mesuré par ICP (inductibly coupled plasma); et
- moins de 10 ppm en sodium, mesuré par ICP.

Avantageusement, l'électrolyte liquide comportera :

- moins de 5 ppm en eau;
- moins de 5 ppm en HF;
- moins de 5 ppm en potassium; et
- moins de 5 ppm en sodium.

Plus avantageusement encore, l'électrolyte liquide comportera :

- moins de 1 ppm en eau;
- moins de 1 ppm en HF;
- moins de 1 ppm en potassium; et
- moins de 1 ppm en sodium.

Selon une autre variante, particulièrement avantageuse, l'électrolyte liquide comportera :

- moins de 0,5 ppm en eau;
- moins de 0,5 ppm en HF;
- moins de 0,5 ppm en potassium; et
- moins de 0,5 ppm en sodium.

Un troisième objet de la présente invention est constitué par un générateur électrochimique comportant un électrolyte purifié obtenu par mise en oeuvre d'un procédé constitutif du premier objet de la présente invention, ou

comportant un des électrolytes purifiés constitutifs du second objet de la présente invention.

Le générateur est avantageusement de type Li-ion ou de type Li-métal.

Selon une variante d'un intérêt particulier, dans les générateurs de l'invention, l'anode est de graphite, carbone, fibre de carbone, alliage, $Li_4Ti_5O_{12}$ ou d'un mélange d'au moins deux de ces derniers.

Selon une autre variante d'un intérêt particulier, dans les générateurs de l'invention, la cathode est choisie dans le groupe constitué par les cathodes de type $LiCoO_2$, $LiMnN_2O_4$ $LiFeMPO_4$, $LiFePO_4$, $LiCo_{1/3}Mn_{1/3}Ni_{1/3}$, $LiCoPO_4$, $Li_4Ti_5O_{12}$ ou d'un mélange d'au moins deux de ces derniers.

Les générateurs de l'invention, de type primaire, rechargeables au Li, dont l'anode est à base du lithium métallique, et qui contiennent un électrolyte de l'invention, présentent un intérêt particulier.

**Un quatrième objet** de la présente invention est constitué par un procédé de purification d'un sel de métal alcalin impur, ledit procédé consistant à solubiliser le sel de métal alcalin dans un solvant à faible température d'évaporation, choisi de préférence dans le groupe constitué par l'acétone, toluène, heptane, éthanol et les mélanges d'au moins deux de ces derniers, et à très faible teneur en eau, puis à traiter la solution de sel de métal alcalin ainsi obtenue avec un excès de carbure de calcium, et finalement à séparer la phase liquide contenant le sel de métal alcalin et le solvant de la phase solide contenant les impuretés et l'hydroxyde de sodium.

De préférence, le sel de métal alcalin impur est choisi parmi le lithium, sodium, potassium et les mélanges impurs d'au moins deux de ces derniers. De préférence, des sels de lithium impurs seront choisis.

De préférence, ce procédé de purification est appliqué à un sel de métal alcalin, de préférence à un sel de lithium qui est sélectionné dans le groupe constitué par LiFSI, LiTFSI, LiBETI, $LiPF_6$, $LiClO_4$, $LiBF_4$, $LiCF_3SO_3$, LiBOB, LiDCTA et les mélanges d'au moins deux de ces derniers.

De préférence les sels de métal alcalin, de préférence les sels de lithium, à purifier présentent des teneurs en impuretés, de préférence de l'eau ou du HF ou un mélange de ces deniers, comprises entre 100 et 500 ppm.

Avantageusement, les sels de métal alcalin à purifier sont choisis dans le groupe des sels impurs de, potassium, lithium et les mélanges d'au moins deux de ces derniers.

Avantageusement, les sels de lithium à purifier sont choisis dans le groupe constitué par LiFSI, LiTFSI, LiBETI, $LiPF_6$ et les mélanges d'au moins deux de ces derniers.

Des performances particulièrement intéressantes sont obtenues lorsque l'on réalise la purification avec un rapport, sel de lithium à purifier/solvant à faible température d'évaporation, qui est compris entre 0,1 M et 2 M, de préférence entre 0,2 M et 1 M.

**Un cinquième objet de la présente invention** est constitué par les sels de métal alcalin, de préférence par les sels de lithium purifiés, obtenus par mise en oeuvre d'un des procédés constitutifs du quatrième objet de la présente invention.

De préférence, ces sels de métal alcalin purifiés se caractérisent par au moins une des caractéristiques suivantes.

- une teneur en eau inférieure ou égale à 20 ppm; et
- une stabilité améliorée d'une batterie contenant le sel de métal alcalin au cyclage, avec une perte de capacité réduite ou nulle, sans formation de réactifs parasites tels HF qui détruit les composants de la batterie.

Dans un test de cyclage (charge-décharge) réalisé entre 4 et 2,5 Volts, on peut constater une diminution d'au moins 1 % de la perte de capacité pour 100 cycles.

## DESCRIPTION DE MODES DE RÉALISATION PRÉFÉRÉS DE L'INVENTION

Les exemples suivants sont donnés à titre uniquement illustratifs et ne sauraient constituer une quelconque limitation de l'objet de l'invention tel qu'il est défini dans les revendications.

Les sels de lithium utilisés dans les exemples 1 à 3 et leur mode de préparation sont décrits notamment dans les deux brevets d'Hydro-Québec N° US-A-6576159 et US-A-6333425.

Les sels de lithium utilisés dans les exemples 4 et 5 sont des produits commerciaux.

### Exemple 1 :

10 grammes de particules de carbure de calcium ($CaC_2$), ayant une taille de particules $d_{50}$= 20μm et une surface spécifique, mesurée selon la méthode BET (Brunauer-Emmett-Teller), qui est de 30 $m^2$/gramme, sont introduits dans un bouteille en polyéthylène d'un volume de 50 ml et mélangés avec 40 ml d'un électrolyte de composition: LiFSI+EC-γBL.

Les impuretés identifiées dans l'électrolyte sont HF et $H_2O$ à des teneurs respectivement de 200 et 1100 ppm.

La préparation est réalisée dans une boîte à gants sous atmosphère d'hélium. Ensuite, la bouteille est placée,

pendant 1 heure, dans un mélangeur situé à l'extérieur de la boîte à gants. Puis, la bouteille du mélange est placée dans une ultra-centrifugeuse mise en fonctionnement à une vitesse de rotation de 13000 tpm (tours par minute), pendant 5 minutes, et ce, afin de séparer la phase liquide de la phase solide.

L'électrolyte purifié est décanté dans la boîte à gants. Le traitement est répété 3 fois afin d'éliminer le maximum de traces de solides et d'impuretés. La quantité d'eau résiduelle dans l'électrolyte final purifié, mesurée par la méthode de Karl Fisher, est inférieure à 1 ppm.

**Exemple 2 :**

19,8 grammes de LiFSI sont mélangés dans 100 ml de EC + γBL (carbonate d'éthylène et gama butyrolactone).

Les impuretés identifiées dans l'électrolyte sont HF et $H_2O$.

La teneur en $H_2O$ est de 1000 ppm et celle de HF de 150 ppm. La couleur de la solution est jaunâtre.

Deux piles boutons identiques sont montées avec 0,2 ml de la solution 1M LiFSI + EC + γBL non purifiée, et selon le montage suivant :

$$\text{graphite naturel (NG)(-) /(Electrolyte : 1M LiTFSI + EC + }\gamma\text{BC/LiFePO}_4\text{(+)},$$

présentant une impédance de 750 Ohms.

Deux piles identiques ont ainsi été préparées pour vérifier la reproductibilité des performances.

L'électrochimie montre que la capacité obtenue après cyclage en C/24 (la charge en 24 heures et la décharge en 24 heures) est de 5,25 mAh/g de $LiFePO_4$, ce qui est équivalent à 3 % de la capacité théorique.

La solution de 1 M LiFSI dans EC + γBL précédemment utilisée est purifiée selon la méthode de l'invention, mise en oeuvre dans les mêmes conditions que dans l'exemple 1 précédent. On constate que sa teneur en eau est réduite à 1 ppm et que la couleur de la solution est claire.

Les deux piles boutons de type NG/1M LiFSI EC + γBL(purifié)/$LiFePO_4$ montées avec 0,5 ml de la solution purifiée présentent une impédance de 9 Ohms.

La capacité obtenue est de 140 mAh/g, ce qui représente 80 % de la capacité théorique.

**Exemple 3 :**

14,9 grammes d'un sel LiDCTA sont mélangés dans 100 ml de EC + γBL. La couleur de la solution est marron foncé.

Les impuretés identifiées dans l'électrolyte sont HF et $H_2O$.

La teneur en $H_2O$ est de 1400 ppm.

Deux piles boutons de type $Li_4Ti_5O_{12}$(-)/1 M LiDCTA + EC + γBL/$LiFePO_4$ (+) sont montées. Leur impédance est de 950 Ohms.

La capacité des deux piles boutons est de 3,5 mAh/g de $LiFePO_4$, ce qui correspond à 2 % de la capacité théorique.

La solution 1 M LiDCTA + EC + γBL est purifiée selon la méthode de l'invention, mise en oeuvre dans les conditions de l'exemple 1, jusqu'à obtenir une teneur en eau de 2 ppm. La solution obtenue est claire.

Deux piles bouton de type $Li_4Ti_5O_{12}$ (-) /1M IFSI + EC + γBL/ $LiFePO_4$ (+) sont montées avec la solution purifiée. Leur indépendance est de 7 Ohms.

Leur capacité est de 157 mAh/g de $LiFePO_4$, ce qui donne 90 % de la capacité théorique.

**Exemple 4 (dosage 1000 ppm d'eau) :**

La solution industrielle commercialisée en 2003 par la société Tomiyama (Japon) de 1 M $LiPF_6$ + EC + DEC (Diéthyl carbonate) est retenue pour la réalisation de l'exemple.

Comme impuretés, la solution électrolytique commerciale comporte une teneur en eau de 20 ppm, de 14 ppm en HF, et de 1 ppm en chacune des espèces Ca, Fe et K.

Deux cellules de piles bouton identiques sont montées comme suit :

$$\text{NG (-) /1M LiPF}_6\text{ + EC + DEC /LiFePO}_4\text{ (+).}$$

Leur impédance est de 10 Ohms et leur capacité est de 75 % de la capacité théorique.

Une quantité de 1000 ppm d'eau a été injectée dans la solution mère 1 M $LiPF_6$ + EC + DEC. Après 24 heures, la teneur de HF est montée à 75 ppm. En revanche, la teneur en Ca, Fe et K est restée constante à 1 ppm. La solution a viré au jaunâtre. L'ajout d'eau à la solution électrolytique commerciale permet de modéliser le vieillissement de l'électrolyte en milieu humide.
L'impédance des deux piles bouton est augmentée à 770 Ohms. La capacité obtenue est de 4 % de la capacité théorique.
La solution 1M $LiPF_6$ + EC + DEC contenant 1000 ppm d'eau est purifiée selon la méthode de l'invention, mise en oeuvre dans les conditions de l'exemple 1, jusqu'à obtenir une teneur en eau de 1 ppm et en HF de 3 ppm.
Aucune trace de Na, Ca ou K est détectée.
Deux piles boutons identiques sont montées selon la chimie suivante NG(-) / 1M $LiPF_6$ + EC + DEC /$LiFePO_4$ (+).
L'impédance de ces deux piles est de 7 Ohms et la capacité est de 80 % de la capacité théorique.

**Exemple 5 - stockage de l'électrolyte :**

La solution 1 M $LiPF_6$ + EC + DEC commercialisée par la compagnie Tomiyama en 2003 est utilisée pour la réalisation de l'exemple. Cette solution contient initialement 20 ppm d'eau et 14 ppm de HF. Elle est stockée à l'extérieur de la boîte à gants pendant 11 mois.
On constate alors que, pendant cette période, la teneur en eau est passée à 500 ppm et celle de HF à 350 ppm.
Deux piles boutons sont montées comme suit :

$$NG / 1M\ LiPF_6 + EC + DEC / LiFePO_4.$$

L'impédance des deux cellules est de 450 Ohms. La capacité obtenue est de 8,7 mAh/g de $LiFeP0_4$, ce qui donne 5 % de la capacité théorique.
La solution est purifiée selon la méthode de l'invention mise en oeuvre dans les conditions de l'exemple 1. La teneur en eau est de 1 ppm, et celle de HF de 3 ppm.
L'impédance des deux piles boutons, montées avec la solution purifiée, est de 7 Ohms.
La capacité de ces piles est de 140 mAh/g de $LiFePO_4$, ce qui correspond à 80 % de la capacité théorique.

**Exemple 6 - Liquide - ionique TFSI :**

10 grammes de particules de carbure de calcium ($CaC_2$), ayant une taille de particules $d_{50}$= 20µm et une surface spécifique, mesurée qui est de 30 $m^2$/gramme, sont introduits dans une bouteille en polyéthylène d'un volume de 50 ml et mélangés avec 30 ml d'un liquide ionique de composition: ethyl-methyl-imidazolium ($EMI^+$) - bis-trifluoromethanesulfonyl imide (TFSI).
La teneur en eau mesurée dans l'électrolyte purifié est de 1200 ppm.
La préparation est réalisée dans une boîte à gants sous atmosphère d'hélium.
Ensuite, la bouteille est placée, pendant 1 heure, dans un mélangeur situé à l'extérieur de la boîte à gants.
Puis, la bouteille du mélange est placée dans une ultra-centrifugeuse mise en fonctionnement à une vitesse de rotation de 13000 tpm, pendant 5 minutes, et ce, afin de séparer les phases liquide et solide.
L'électrolyte purifié est décanté dans la boîte à gants. Le traitement est répété trois fois afin d'éliminer le maximum de traces de solides et d'impuretés. La quantité d'eau résiduelle dans l'électrolyte final purifié, mesurée par la méthode de Karl Fisher, est inférieure à 5 ppm d'eau.

**Exemple 7 - Liquide - ionique TFSI :**

10 grammes de particules de carbure de calcium ($CaC_2$), ayant une taille de particules $d_{50}$= 20µm et une surface spécifique mesurée qui est de 30$m^2$/gramme, sont introduits dans une bouteille en polyéthylène d'un volume de 50 ml et mélangés avec 35 ml d'un liquide ionique de composition: ethyl-methyl-imidazolium ($EMI^+$) - bis-trifluoromethanesulfonyl imide (TFSI) de l'exemple 6 avec 1 M LiTFSI.
La teneur en eau mesurée dans l'électrolyte purifié est de 1100 ppm.
La préparation est réalisée dans une boîte à gants sous atmosphère d'hélium. Ensuite, la bouteille est placée, pendant 1 heure, dans un mélangeur situé à l'extérieur de la boîte à gants. Puis, la bouteille du mélange est placée dans une ultra-centrifugeuse mise en fonctionnement à une vitesse de rotation de 13000 tpm, pendant 5 minutes, et ce, afin de séparer les phases liquide et solide.
L'électrolyte purifié est décanté dans la boîte à gants. Le traitement est répété trois fois afin d'éliminer le

maximum de traces de solides et d'impuretés. La quantité d'eau résiduelle dans l'électrolyte final purifié, mesurée par la méthode de Karl Fisher, est inférieure à 7 ppm d'eau.

**Exemple 8 - mélange liquide - ionique TFSI + 1 M LiTFSI :**

10 grammes de particules de carbure de calcium ($CaC_2$), ayant une taille de particules $d_{50}$= 20μm et une surface spécifique mesurée qui est de 30 $m^2$/gramme, sont introduits dans une bouteille en polyéthylène d'un volume de 50 ml et mélangés avec 30 ml d'un liquide ionique de composition: ethyl-methyl-imidazolium ($EMI^+$) - bis-trifluoromethanesulfonyl imide (TFSI) de l'exemple 6 avec 1 M LiTFSI.

La teneur en eau mesurée dans l'électrolyte purifiée est de 1500 ppm.

La préparation est réalisée dans une boîte à gants sous atmosphère d'hélium. Ensuite, la bouteille est placée, pendant 1 heure, dans un mélangeur situé à l'extérieur de la boîte à gants. Puis, la bouteille du mélange est placée dans une ultra-centrifugeuse mise en fonctionnement à une vitesse de rotation de 13000 tpm, pendant 5 minutes, et ce, afin de séparer les phases liquide et solide.

L'électrolyte purifié est décanté dans la boîte à gants. Le traitement est répété trois fois afin d'éliminer le maximum de traces de solides et d'impuretés. La quantité d'eau résiduelle dans l'électrolyte final purifié, mesurée par la méthode de Karl Fisher, est inférieure à 10 ppm d'eau

**Exemple 9: liquide - ionique FSI + 1 M LiFSI :**

10 grammes de particules de carbure de calcium ($CaC_2$) ayant une taille de particules $d_{50}$= 20μm et une surface spécifique mesurée qui est de 30$m^2$/gramme, sont introduits dans une bouteille en polyéthylène d'un volume de 50 ml et mélangés avec 40 ml d'un liquide ionique de composition: ethyl-methyl-imidazolium ($EMI^+$) - bis-fluorosufonyl imide (FSI) + 1 M LiFSI.

La teneur en eau mesurée dans l'électrolyte purifié est de 1300 ppm.

La préparation est réalisée dans une boîte à gants sous atmosphère d'hélium. Ensuite, la bouteille est placée, pendant 1 heure, dans un mélangeur situé à l'extérieur de la boîte à gants. Puis, la bouteille du mélange est placée dans une ultra-centrifugeuse mise en fonctionnement à une vitesse de rotation de 13000 tpm, pendant 5 minutes, et ce, afin de séparer les phases liquide et solide.

L'électrolyte purifié est décanté dans la boîte à gants. Le traitement est répété trois fois afin d'éliminer le maximum de traces de solides et d'impuretés. La quantité d'eau résiduelle dans l'électrolyte final purifié, mesurée par la méthode de Karl Fisher, est inférieure à 10 ppm d'eau.

**Exemple 10 - Purification d'un sel LiTFSI dans un solvent (acetonityle) :**

10 grammes de particules de carbure de calcium ($CaC_2$) ayant une taille de particules $d_{50}$= 20μm et une surface spécifique mesurée qui est de 30$m^2$/gramme, sont introduits dans une bouteille en polyéthylène d'un volume de 50 ml et mélangés avec 30 ml d'un liquide ionique de composition: 1 M de LiTFSI dans l'acetonityle. Le LiTFSI contient 2000 ppm de $H_2O$ et l'acetonitryle est anhydre (Alldrich).

La teneur en $H_2O$ mesurée dans l'électrolyte purifié est de 2000 ppm.

La préparation est réalisée dans une boîte à gants sous atmosphère d'hélium. Ensuite, la bouteille est placée, pendant 1 heure, dans un mélangeur situé à l'extérieur de la boîte à gants. Puis, la bouteille du mélange est placée dans une ultra-centrifugeuse mise en fonctionnement à une vitesse de rotation de 13000 tpm, pendant 5 minutes, et ce, afin de séparer les phases liquide et solide.

L'électrolyte purifié est décanté dans la boîte à gants. Le traitement est répété trois fois afin d'éliminer le maximum de traces de solides et d'impuretés. La quantité d'eau résiduelle dans l'électrolyte final purifié, mesurée par la méthode de Karl Fisher, est inférieure à 10 ppm d'eau.

**AVANTAGES PARTICULIERS**

Une des applications particulièrement intéressantes de l'invention réside dans la possibilité de purifier des électrolytes stockés depuis plus de six mois. Cette technique de purification est particulièrement économique pour les compagnies productrices de batteries, ainsi que pour celles qui produisent des électrolytes. En effet, dans le cas des compagnies de production de batteries, tout problème de production qui durerait plusieurs semaines pourrait fait perdre tout le stock d'électrolyte.

Ainsi, avec la méthode selon l'invention, le temps de stockage des électrolytes devient potentiellement illimité.

Dans une autre application de l'invention, les compagnies productrices d'électrolyte peuvent utiliser la méthode de purification comme étape finale après la synthèse de l'électrolyte. En fait, l'eau résiduelle sera éliminée et ainsi la

durée de stockage de l'électrolyte est prolongée.

Dans une autre application de l'invention, les producteurs de sel de lithium peuvent améliorer la qualité des sels de lithium qui sont souvent obtenus sous une forme solide impure et éventuellement hydratée. Les sels de lithium sont connus par leurs propriétés hygroscopiques. On procède d'abord à la solubilisation du sel de lithium dans un solvant à faible température d'évaporation, tel l'acétone, le toluène, l'heptane, l'éthanol ou un mélange d'au moins deux de ces derniers, et à très faible teneur en eau. Un traitement de la solution de sel de lithium avec un excès de sel de calcium (excès par rapport à la quantité d'eau présente dans la solution) permet de réduire la teneur en eau à l'échelle de quelques ppm après séparation des phases liquide et solide.

Enfin la méthode de l'invention met à disposition de nouveaux électrolytes caractérisés par un degré de pureté exceptionnel et ouvre ainsi la porte à la préparation de systèmes électrochimiques utilisant un électrolyte à base d'un sel de lithium et d'un niveau de performance jamais atteint à ce jour.

Bien que la présente invention ait été décrite à l'aide de mises en oeuvre spécifiques, il est entendu que plusieurs variations et modifications peuvent se greffer auxdites mises en oeuvre, et la présente invention vise à couvrir de telles modifications, usages ou adaptations de la présente invention suivant en général les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Procédé de purification d'un électrolyte ionique contenant au moins un sel de métal alcalin, ledit procédé comportant au moins une étape de mise en contact de particules de carbure de calcium avec l'électrolyte.

2. Procédé de purification selon la revendication 1, dans lequel l'électrolyte ionique est liquide et contient au moins un solvant de type ionique qui dissout le sel alcalin.

3. Procédé de purification selon la revendication 1, dans lequel l'électrolyte ionique est de type polymère gel ou de type mélange d'au moins deux polymères gel, la purification étant réalisée avant formation d'une matrice polymère.

4. Procédé de purification selon la revendication 1, dans lequel l'électrolyte ionique est de type sel fondu et comprend un sel fondu ou un mélange d'au moins deux sels fondus.

5. Procédé de purification selon la revendication 4, dans lequel l'anion du sel fondu est le bis(fluoro-sulfonyl)imide (FSI-) et/ou le bis(trifluorométhane-sulfonyl)imide (TFSI-).

6. Procédé de purification selon la revendication 4, ou 5, dans lequel le cation du sel fondu est choisi parmi l'éthyl-3-méthylimidazolium (EMI), le N-méthyl-N-propylpyrolidium, le N-méthyl-N-butylpyrrolidium($PY14^+$) et le N-propyl-piperidinium ($PPT3^+$).

7. Procédé de purification selon l'une quelconque des revendications 1 à 6, dans lequel le sel alcalin est choisi dans le groupe constitué par les sels de sodium, les sels de potassium, les sels de lithium et les mélanges d'au moins deux de ces derniers.

8. Procédé selon la revendication 7, dans lequel le sel alcalin est choisi dans le groupe constitué par KTFSI, KFSI, $NaBF_4$, les sels de lithium et les mélanges d'au moins deux de ces sels.

9. Procédé de purification selon l'une quelconque des revendications 1 à 8, dans lequel les particules du carbure de calcium présentent une $d_{50}$ comprise entre 1 et 100 micromètres, bornes comprises.

10. Procédé de purification selon l'une quelconque revendications 1 à 9, dans lequel les particules de carbure de calcium ont une surface spécifique mesurée selon la méthode BET qui est comprise entre 5 et 200 $m^2$/gramme, bornes comprises.

11. Procédé de purification selon l'une quelconque des revendications 1 à 10, dans lequel la quantité de carbure de calcium représente au moins 5 grammes pour 20 ml d'électrolyte à purifier.

12. Procédé de purification selon l'une quelconque des revendications 1 à 11, dans lequel les particules de carbure de

calcium ont des tailles comprises entre 100 micromètres et 1 nanomètre.

**13.** Procédé de purification selon l'une quelconque des revendications 1 à 12, dans lequel le sel alcalin est un sel de lithium choisi de préférence dans le groupe constitué par LiFSI, LiTFSI, LiBETI, $LiPF_6$, $LiClO_4$, $LiBF_4$, $LiCF_3SO_3$, LiBOB, LiDCTA, et les mélanges d'au moins deux d'entre eux, le sel de lithium étant présent dans l'électrolyte à une concentration comprise entre 0,1 et 2 Molaire par rapport à la quantité d'électrolyte.

**14.** Procédé de purification selon la revendication 2, dans lequel le sel alcalin est dissous dans un solvant choisi dans le groupe constitué par: EC (carbure d'éthylène), PC (carbonate de propylène), DME (diméthyléthylene), DMC (diméthylcarbonate), DEC (diethylcarbonate), EMC (éthylmethylcarbonate), GBL (gamabutyrolactone) et les mélanges d'au moins deux d'entre eux, le solvant étant la référence molaire par rapport à laquelle la quantité de sel alcalin à ajouter est calculée.

**15.** Procédé de purification selon la revendication 3, dans lequel le polymère est de type polyéther, siloxane, PVDF (polyvinyldifluoro), Polyacrylonitrile, EPDM (éthylène propylènediéthylmonomère), PMMA (polymethylmétacrylate) ou le mélange d'au moins deux d'entre eux, la teneur en polymère dans l'électrolyte étant comprise entre 1 et 30 %, par rapport au poids total de l'électrolyte.

**16.** Procédé selon la revendication 1, **caractérisé en ce que** l'hydroxyde de calcium formé lors de la mise en contact du carbure de calcium avec l'électrolyte est séparé et calciné, pour régénérer le carbure de calcium.

**17.** Procédé selon la revendication 16, **caractérisé en ce qu'**il est réalisé de façon continue et

- le carbure de calcium régénéré est recyclé; et
- la purification est réalisée sous atmosphère inerte.

**18.** Procédé de purification selon la revendication 2, réalisé de façon semi-continue pour un électrolyte liquide, **caractérisé en ce que** l'électrolyte liquide est soumis à une percolation sur un lit de carbure de calcium de façon continue jusqu'à épuisement du lit de carbure de calcium.

**19.** Procédé de purification d'un sel impur choisi parmi les sels impurs de sodium, potassium, lithium et les mélanges d'au moins 2 d'entre eux, ledit procédé consistant à solubiliser le sel impur dans un solvant à faible température d'évaporation, choisi dans le groupe constitué par l'acétone, le toluène, l'heptane, l'éthanol et les mélanges d'au moins deux d'entre eux, à très faible teneur en eau, puis à traiter la solution de sel ainsi obtenue avec un excès de carbure de calcium, et finalement à séparer la phase liquide contenant le sel et le solvant de la phase solide contenant les impuretés et l'hydroxyde de sodium.

**20.** Procédé de purification selon la revendication 19, dans lequel le sel - impur est un sel impur de lithium sélectionné dans le groupe constitué par LiFSI, LiTFSI, LiBETI, $LiPF_6$, $LiClO_4$, $LiBF_4$, $LiCF_3SO_3$, LiBOB, LiDCTA, et les mélanges d'au moins deux d'entre eux.

**21.** Procédé de purification selon la revendication 19 ou 20, mis en oeuvre pour un sel dans lequel les teneurs en impuretés sont comprises entre 100 et 500 ppm.

## Claims

**1.** A process for the purification of an ionic electrolyte comprising at least one alkali metal salt, said process comprising at least one step in which calcium carbide particles are brought into contact with the electrolyte.

**2.** The purification process as claimed in claim 1, in which the ionic electrolyte is liquid and comprises at least one solvent of ionic type which dissolves the alkali metal salt.

**3.** The purification process as claimed in claim 1, in which the ionic electrolyte is of polymer gel type or of the type comprising a mixture of at least two polymer gels, the purification being carried out before formation of a polymer matrix.

**4.** The purification process as claimed in claim 1, in which the ionic electrolyte is of molten salt type and comprises a

molten salt or a mixture of at least two molten salts.

**5.** The purification process as claimed in claim 4, in which the anion of the molten salt is bis(fluorosulfonyl)imide (FSI-) and/or bis(trifluoromethanemethanesulfonyl)imide (TFSI-).

**6.** The purification process as claimed in claim 4 or 5, in which the cation of the molten salt is ethyl-3-methylimidazolium (EMI) and/or (n-methyl)(n-propyl)pyrrolidium and/or (n-methyl)(n-butyl)pyrrolidium ($PY14^+$) and/or (n-propyl)piperidinium ($PPT3^+$).

**7.** The purification process as claimed in any one of claims 1 to 6, in which the alkali metal salt is chosen from the group consisting of sodium salts, potassium salts and lithium salts and the mixtures of at least two of them.

**8.** The purification process as claimed in claim 7, wherein the alkali metal salt is chosen from the group consisting of KTFSI, KFSI, $NaBF_4$, lithium salts and the mixtures of at least two of these salts.

**9.** The purification process as claimed in any one of claims 1 to 8, in which the the calcium carbide particles used to carry out the purification exhibit a $d_{50}$ of between 1 and 100 micrometers, limits included.

**10.** The purification process as claimed in any one of claims 1 to 9, in which the calcium carbide particles have a specific surface, measured according to the BET method, which is between 5 and 200 $m^2$/gram.

**11.** The purification process as claimed in any one of claims 1 to 10, in which the amount of calcium carbide represents at least 5 grams per 20 ml of electrolyte to be purified.

**12.** The purification process as claimed in any one of claims 1 to 11, in which the calcium carbide particles have sizes of between 100 micrometers and 1 nanometer.

**13.** The purification process as claimed in any one of claims 1 to 12, in which the alkali metal salt is a lithium salt preferably chosen from the group consisting of LiFSI, LiTFSI, LiBETI, $LiPF_6$, $LiClO_4$, $LIBF_4$, $LiCF_3SO_3$, LIBOB, LiDCTA and the mixtures of at least two of them, the lithium salt being present in the electrolyte at a concentration of between 0.1 and 2 Molar, expressed with respect to the amount of electrolyte.

**14.** The purification process as claimed in claim 2, in which the alkali metal salt is dissolved in a solvent chosen from the group consisting of: EC (ethylene carbonate), PC (propylene carbonate), DME (dimethylethylene), DMC (dimethyl carbonate), DEC (diethyl carbonate), EMC (ethyl methyl carbonate), GBL (γ-butyrolactone) and the mixtures of at least two of them, the solvent being the molar reference with respect to which the amount of alkali metal salt to be added is calculated.

**15.** The purification process as claimed in claim 3, in which the polymer is of polyether, siloxane, PVDF (polyvinyldifluoro), polyacrylonitrile, EPDM (ethylene/propylene/diethyl monomer) or PMMA (poly-(methyl methacrylate)) type or the blend of at least two of them, the polymer content of the electrolyte being between 1 and 30% of the total weight of the electrolyte.

**16.** The process as claimed in claim 1, wherein the calcium hydroxide, formed upon contacting the calcium carbide with the electrolyte, is separed and calcined, in order to regenerate the calcium carbide.

**17.** The process as claimed in claim 16, in which:

- the regenerated calcium carbide is recycled ; and
- the purification is carried out under an inert atmosphere.

**18.** The purification process as claimed in claim 2, carried out semicontinuously for a liquid electrolyte, wherein the liquid electrolyte is subjected to continuous percolation over a bed of calcium carbide until the bed of calcium salt has been exhausted.

**19.** A process for the purification of an impure salt selected from impure sodium, potassium, lithium salts and mixtures of at least two of them, said process consisting in dissolving the impure salt in a solvent with a low evaporation temperature, chosen from the group consisting of acetone, toluene, heptane, ethanol and the mixtures of at least

two of them, and with a very low water content, and then treating the solution of salt thus obtained with an excess of calcium carbide and, finally, in separating the liquid phase comprising the alkali metal salt and the solvent, from the solid phase comprising the impurities and sodium hydroxide.

**20.** The purification process as claimed in claim 19, in which the impure salt is an impure lithium salt selected from the group consisting of LiFSI, LiTFSI, LiBETI, $LiPF_6$, $LiClO_4$, $LiBF_4$, $LiCF_3SO_3$, LiBOB, LiDCTA and the mixtures of at least two of them.

**21.** The purification process as claimed in claim 19 or 20, in which the contents of the impurities are between 100 and 500 ppm.

## Patentansprüche

**1.** Reinigungsverfahren eines ionischen Elektrolyts, das mindestens ein alkalisches Metallsalz enthält, wobei das Verfahren mindestens einen Schritt der Kontaktaufnahme von Kalziumkarbidpartikeln mit dem Elektrolyt aufweist.

**2.** Reinigungsverfahren nach Anspruch 1, wobei der ionische Elektrolyt flüssig ist und mindestens ein Lösungsmittel ionischen Typs enthält, das das alkalische Salz aufschließt.

**3.** Reinigungsverfahren nach Anspruch 1, wobei der ionische Elektrolyt vom Typ Polymergel oder vom Typ Gemisch aus mindestens zwei Polymergelen ist, wobei die Reinigung vor der Ausbildung einer Polymermatrix durchgeführt wird.

**4.** Reinigungsverfahren nach Anspruch 1, wobei der ionische Elektrolyt vom Typ geschmolzenes Salz ist und ein geschmolzenes Salz oder ein Gemisch aus mindestens zwei geschmolzenen Salzen umfasst.

**5.** Reinigungsverfahren nach Anspruch 4, wobei das Anion des geschmolzenen Salzes das Bis(fluor-sulfonyl)imid (FSI-) und/oder das Bis(trifluormethan-sulfonyl)imid (TFSI-) ist.

**6.** Reinigungsverfahren nach Anspruch 4 oder 5, wobei das Kation des geschmolzenen Salzes aus dem Ethyl-3-methylimidazolium (EMI), dem N-methyl-N-propylpyrrolidium, dem N-methyl-N-butylpyrrolidium (PY14*) und dem N-propylpiperidinium (PPT3*) ausgewählt ist.

**7.** Reinigungsverfahren nach einem der Ansprüche 1 bis 6, wobei das alkalische Salz aus der Gruppe ausgewählt ist, die aus den Natriumsalzen, den Kaliumsalzen, den Lithiumsalzen und den Gemischen aus mindestens zwei dieser Letztgenannten besteht.

**8.** Verfahren nach Anspruch 7, wobei das alkalische Salz aus der Gruppe ausgewählt ist, die aus KTFSI, KFSI, $NaBF_4$, den Lithiumsalzen und den Gemischen aus mindestens zwei dieser Salze besteht.

**9.** Reinigungsverfahren nach einem der Ansprüche 1 bis 8, wobei die Kalziumkarbidpartikel eine $d_{50}$ zwischen 1 und 100 Mikrometern inklusive aufweisen, Grenzbereiche inklusive.

**10.** Reinigungsverfahren nach einem der Ansprüche 1 bis 9, wobei die Kalziumkarbidpartikel eine spezifische Fläche haben, die gemäß der BET-Methode gemessen wird, die zwischen 5 und 200 $m^2$/Gramm inklusive beträgt, Grenzbereiche inklusive.

**11.** Reinigungsverfahren nach einem der Ansprüche 1 bis 10, wobei die Menge Kalziumkarbid mindestens 5 Gramm für 20 ml zu reinigendes Elektrolyt darstellt.

**12.** Reinigungsverfahren nach einem der Ansprüche 1 bis 11, wobei die Kalziumkarbidpartikel Größen zwischen 100 Mikrometern und 1 Nanometer inklusive haben.

**13.** Reinigungsverfahren nach einem der Ansprüche 1 bis 12, wobei das alkalische Salz ein Lithiumsalz ist, das vorzugsweise aus der Gruppe ausgewählt ist, die aus LiFSI, LiTFSI, LiBETI, $LiPF_6$, $LiClO_4$, $LiBF_4$, $LiCF_3SO_3$, LiBOB, LiDCTA besteht und den Gemischen aus mindestens zwei von ihnen, wobei das Lithiumsalz in dem Elektrolyt in einer Konzentration zwischen 0,1 und 2 Mol inklusive im Verhältnis zur Elektrolytmenge vorhanden ist.

**14.** Reinigungsverfahren nach Anspruch 2, wobei das alkalische Salz in einem Lösungsmittel gelöst ist, das aus der Gruppe ausgewählt ist, die besteht aus: EC (Ethylenkarbid), PC (Propylenkarbonat), DME (Dimethylethylen), DMC (Dimethylkarbonat), DEC (Diethylkarbonat), EMC (Ethylmethylkarbonat), GBL (Gamabutyrolazeton) und den Gemischen aus mindestens zwei von ihnen, wobei das Lösungsmittel die molaren Referenz ist, im Verhältnis zu der die Menge des hinzuzufügenden alkalischen Salzes berechnet wird.

**15.** Reinigungsverfahren nach Anspruch 3, wobei das Polymer vom Typ Polyether, Siloxan, PVDF (Polyvinyldifluor), Polyacrylnitril, EPDM (Ethylen-Propylen-Diethylmonomer), PMMA (Polymethylmethacrylat) ist oder das Gemisch aus mindestens zwei von ihnen, wobei der Polymergehalt in dem Elektrolyt zwischen 1 und 30 % inklusive im Verhältnis zum Gesamtgewicht des Elektrolyts ist.

**16.** Verfahren nach Anspruch 1, **dadurch gekennzeichnet, dass** das bei der Kontaktaufnahme des Kalziumkarbids mit dem Elektrolyt gebildete Kalziumhydroxid separiert und kalziniert wird, um das Kalziumkarbid zu regenerieren.

**17.** Verfahren nach Anspruch 16, **dadurch gekennzeichnet, dass** es kontinuierlich durchgeführt wird und

- das regenerierte Kalziumkarbid recycelt wird, und
- die Reinigung in einer inerten Atmosphäre durchgeführt wird.

**18.** Reinigungsverfahren nach Anspruch 2, das für einen flüssigen Elektrolyten halbkontinuierlich durchgeführt wird, **dadurch gekennzeichnet, dass** der flüssige Elektrolyt kontinuierlich einer Perkolation auf einem Kalziumkarbidbett bis zur Erschöpfung des Kalziumkarbidbetts unterzogen wird.

**19.** Reinigungsverfahren eines unreinen Salzes, das aus den unreinen Natrium-, Kalium-, Lithiumsalzen und den Gemischen aus mindestens zwei von ihnen ausgewählt ist, wobei das Verfahren darin besteht, das unreine Salz in einem Lösungsmittel bei niedriger Verdampfungstemperatur zu solubilisieren, das aus der Gruppe ausgewählt ist, die aus dem Azeton, dem Toluen, dem Heptan, dem Ethanol und den Gemischen aus mindestens zwei von ihnen besteht, mit sehr geringem Wassergehalt, danach die derart gewonnene Salzlösung mit einem Überschuss Kalziumkarbid behandelt wird und abschließend die flüssige Phase, die das Salz enthält, und das Lösungsmittel der festen Phase, die die Unreinheiten und das Natriumhydroxid enthält, separiert werden.

**20.** Reinigungsverfahren nach Anspruch 19, wobei das unreine Salz ein unreines Lithiumsalz ist, das aus der Gruppe ausgewählt ist, die aus LiFSI, LiTFSI, LiBETI, $LiPF_6$, $LiClO_4$, $LiBF_4$, $LiCF_3SO_3$, LiBOB, LiDCTA und den Gemischen aus mindestens zwei von ihnen besteht.

**21.** Reinigungsverfahren nach Anspruch 19 oder 20, das für ein Salz umgesetzt wird, in dem die Gehalte an Unreinheiten zwischen 100 und 500 ppm inklusive betragen.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- CA 2207730 A
- US 5683832 A, Bonhote
- US 6280882 A
- WO 03063287 A
- EP 1249461 A
- US 6190804 A, Ishiko
- WO 2004088610 A
- US 6576159 A
- US 6333425 A


### Littérature non-brevet citée dans la description


- **J. O. BESENHARD.** Handbook of Battery Materials. Wiley-VCH, 1999, 464
- **ALLEN J.BARD ; LARRY R. FAULKNER.** Electrochemistry Method. John Wiley & Sons, 1980
- **D. G. LOVERING ; R. J. GALE.** Molten Salt Techniques. Plenum Press, 1942, vol. 1, 2-5
- **G. MORANT ; J. HLADIK.** Électrochimie des sels fondus Tome I - propriétés de transport. 1969
- **M. ARMAND.** *Electrochimica Acta,* 2004, vol. 49, 4583-4588
- **HIROE NAKAGAWA.** Relationship between Structural Factor of Gel Electrolyte and Characteristics of Electrolyte and Lithium-ion Polymer Battery Performances. *The 44th Symposium in Japan,* 04 Novembre 2003